(19) **Europäisches Patentamt / European Patent Office / Office européen des brevets**

(11) **EP 1 324 889 B1**

(12) **FASCICULE DE BREVET EUROPEEN**

(45) Date de publication et mention
de la délivrance du brevet:
**27.06.2007 Bulletin 2007/26**

(51) Int Cl.:
**B60C 23/04** $^{(2006.01)}$

(21) Numéro de dépôt: **01974294.9**

(22) Date de dépôt: **25.09.2001**

(86) Numéro de dépôt international:
**PCT/EP2001/011069**

(87) Numéro de publication internationale:
**WO 2002/030692 (18.04.2002 Gazette 2002/16)**

(54) **PROCEDE DE LOCALISATION AUTOMATIQUE DES ROUES DROITES ET GAUCHES D'UN VEHICULE AUTOMOBILE**

VERFAHREN ZUR AUTOMATISCHEN ORTUNG VON DEN LINKS- UND RECHTSRÄDERN EINES KRAFTFAHRZEUGES

METHOD FOR AUTOMATICALLY LOCATING RIGHT AND LEFT WHEELS OF A MOTOR VEHICLE

(84) Etats contractants désignés:
**DE ES GB IT**

(30) Priorité: **11.10.2000 FR 0012974**

(43) Date de publication de la demande:
**09.07.2003 Bulletin 2003/28**

(73) Titulaires:
• **SIEMENS AKTIENGESELLSCHAFT**
  **80333 München (DE)**
• **Siemens VDO Automotive**
  **31036 Toulouse Cedex 1 (FR)**

(72) Inventeurs:
• **FONZES, Georges**
  **F-31100 Toulouse (FR)**
• **GOESER, Gerhard**
  **F-93080 Pentling (DE)**

(56) Documents cités:
**DE-A- 19 856 861**

**Description**

La présente invention concerne un procédé de localisation automatique des roues droites et gauches d'un véhicule automobile. Plus particulièrement, mais pas exclusivement, ce procédé est mis en oeuvre en association avec un système de surveillance de la pression des pneus.

En effet, il est déjà connu de surveiller en permanence la pression régnant à l'intérieur des pneumatiques d'un véhicule. Ces mesures de pression (éventuellement corrigées en fonction de la température et du vieillissement du pneu ou de tout autre paramètre) sont traitées par un calculateur et un signal d'alarme est émis lorsque la pression d'un pneu est anormale. Le calculateur traitant les mesures de pression peut être implanté sur la roue elle-même ou en tout endroit approprié du véhicule.

Les mesures de pression sont réalisées par un capteur spécifique associé à chacune des roues. Ce capteur envoie vers un calculateur distant, la mesure de pression associée à un code identifiant du capteur. Bien entendu, il est nécessaire que le calculateur sache attribuer à ce code identifiant une position de capteur sur le véhicule. Ainsi après traitement, le calculateur doit être capable de dire que la mesure de pression associée au code identifiant X provient de la roue avant droite (par exemple). Pour cela il est nécessaire d'apprendre, au calculateur, la position, sur le véhicule, du capteur et son code identifiant.

Cet apprentissage peut être effectué manuellement. Par exemple, le calculateur est placé en mode apprentissage et demande les codes de chacun des capteurs de pression dans un ordre préétabli. Ce procédé d'apprentissage est cependant relativement lent. En outre, il doit être répété à chaque changement de pneu et présente l'inconvénient d'obliger le conducteur à entrer des données dans le calculateur du véhicule. Si le conducteur oublie de mémoriser le nouveau code après un changement de pneu, il y a risque d'erreur sur la position d'une roue présentant une pression anormale. Ceci peut avoir de graves conséquences.

Il est apparu opportun de réaliser cet apprentissage de la position des roues, de manière automatique, pendant le déplacement du véhicule.

Pour ce faire, on utilise le principe physique suivant : les roues internes à un virage tournent moins vite que les roues externes au virage.

Le document DE-A-19856861 divulgue un tel dispositif, où les roues d'un véhicule sont equipées, d'accélérométres. Le préambule de la revendication 1 se repose sur les caractéristiques de ce document DE-A-19856861.

Cependant, les essais réalisés en tenant compte de l'accélération centripète de chaque roue montrent que les écarts de vitesse entre roue droite et gauche sont de l'ordre de 1 à 10% de la valeur mesurée (accélération).

Sachant que les accéléromètres standards permettant de mesurer l'accélération centripète du véhicule ont une résolution de 1%, un bruit de $\pm$ 10%, une erreur de $\pm$ 15% et présentent des dérives en température et en temps, il semble impossible d'utiliser la mesure de l'accélération centripète de chaque roue en utilisant des accéléromètres standards, pour déterminer par comparaison directe quelle roue tourne le moins vite.

Il est bien sûr possible d'utiliser des accéléromètres plus précis, mais la précision de mesure requise ici implique l'utilisation d'accéléromètres très coûteux et en général très fragiles. Cette solution est inapplicable dans l'environnement automobile.

L'invention a donc pour but de déterminer de manière automatique la position des roues droites et gauches d'un véhicule en utilisant des accéléromètres standards.

A cet effet, la présente invention concerne un procédé de localisation automatique des roues droites et gauches d'un véhicule automobile du type comportant une étape de mesure automatique de l'accélération centripète d'une roue, le dit procédé étant caractérisé en ce qu'il consiste à comparer l'accélération centripète théorique d'une roue en ligne droite avec l'accélération centripète mesuréede cette même roue en virage pour une vitesse de véhicule donnée et pour un angle volant donné, afin de déterminer si la dite roue se trouve sur la droite ou sur la gauche du véhicule.

Ainsi, en comparant l'accélération d'une même roue en ligne droite et en virage on s'affranchit des problèmes de dispersion des précisions des différents capteurs d'accélération, les uns par rapport aux autres.

Plus particulièrement, la présente invention concerne un procédé de localisation automatique consistant dans un premier temps à :

a) - mesurer l'angle volant T du véhicule et lorsque cet angle volant est sensiblement nul (véhicule en ligne droite),
b) - mesurer l'accélération centripète $A_i$ de chacune des roues du véhicule à l'aide d'un capteur associé à chacune des roues, et
c) - déterminer un coefficient de correction $k_i$ pour chacune des roues selon la loi suivante :

$$A_i = K_i\, V^2, \qquad\qquad \textbf{(1)}$$

où $A_i$ est l'accélération centripète en ligne droite mesurée sur la roue i, et V est la vitesse du véhicule, et consistant, dans un second temps; lorsque le véhicule est en virage :

d) - à mesurer l'accélération centripète en virage $A_{iv}$ de chacune des roues,

e) - à former la différence d'accélération $\Delta_i$ entre l'accélération théorique en ligne droite $A_i$ pour une roue i et une vitesse V données et l'accélération mesurée en virage $A_{iv}$ pour cette même roue, à cette même vitesse,

$$\Delta_i = A_{iv} - A_{i,}$$

c'est à dire

$$\Delta_i = A_{iv} - K_i V^2 \qquad (2)$$

f) - à former le produit cette différence $\Delta_i$ par T l'angle au volant,

$$(A_{iv} - K_i V^2) \times T \qquad (3)$$

g) - à déterminer le signe de ce produit, en fonction d'une convention choisie à savoir ; angle volant négatif si virage à gauche (ou l'inverse), et

h) - en déduire pour chacune des roues son emplacement sur le coté gauche ou droit du véhicule.

Avantageusement, on calcule un coefficient de correction pour chaque roue lorsque le véhicule est en ligne droite. Ceci permet de comparer entre elles les mesures faites par les capteurs sur différentes roues en s'affranchissant, là encore, des erreurs et imprécisions des différents capteurs entre eux.

Avantageusement, la présente invention permet de mettre en oeuvre des capteurs standards et d'obtenir des résultats avec une erreur inférieure à 1 %.

Avantageusement, encore en fixant une convention pour la représentation des angles volant (par exemple les angles volants négatifs correspondent à un virage à gauche du véhicule), et en déterminant simplement le signe du produit suivant :

$$(A_{iv} - K_i V^2) \times T$$

où $A_{iv}$ est la mesure de l'accélération de la roue i en virage, $K_i V^2$ est l'accélération théorique de la roue i en ligne droite, et T la valeur algébrique de l'angle volant; il est possible d'en déduire si la roue i est une roue droite ou gauche du véhicule.

En effet, en supposant que la convention de mesure de l'angle volant établisse qu'un virage à gauche a un angle négatif, on obtient lorsque le véhicule tourne à gauche T < 0. Lorsqu'un véhicule tourne à gauche, sa roue gauche a une vitesse inférieure à cette même roue gauche en ligne droite. De même, l'accélération de la roue gauche en virage est inférieure à l'accélération de cette même roue gauche en ligne droite. De ce fait, la différence $\Delta_i$ entre l'accélération mesurée en virage et l'accélération théorique en ligne droite est < 0. Le produit de T par $\Delta_i$ est donc positif.

Si pour cette même convention de mesure de l'angle volant le produit T par $\Delta_i$ est négatif c'est que la roue i est une roue droite.

Ainsi, pour la convention de mesure de l'angle volant établie (gauche = négatif) le signe du produit $T \times \Delta_i$ indique directement que la roue i est à droite lorsqu'il est négatif et que la roue i est à gauche lorsqu'il est positif.

Avantageusement, pour améliorer la précision de la localisation des roues droites et gauches, il est possible de refaire un certain nombre de fois la détermination des roues droites et gauches et de ne la valider que lorsque que la même localisation a été trouvé plusieurs fois, pour une roue donnée.

Avantageusement encore en effectuant une sommation d'une pluralité de $\Delta_i$ d'une même roue et comparant cette somme avec toutes les sommes des autres roues (en choisissant la consigne angle volant négatif pour un virage à gauche), les deux plus grandes sommes obtenues correspondent aux roues gauches du véhicule.

D'autres objets, caractéristiques et avantages de la présente invention ressortiront de la description qui suit à titre d'exemple non limitatif et en référence aux dessins annexés dans lesquels :

**La figure 1** est une vue schématique représentant un schéma synoptique du procédé selon l'invention, et
**La figure 2** est une vue schématique représentant un véhicule muni de quatre capteurs d'accélérations.

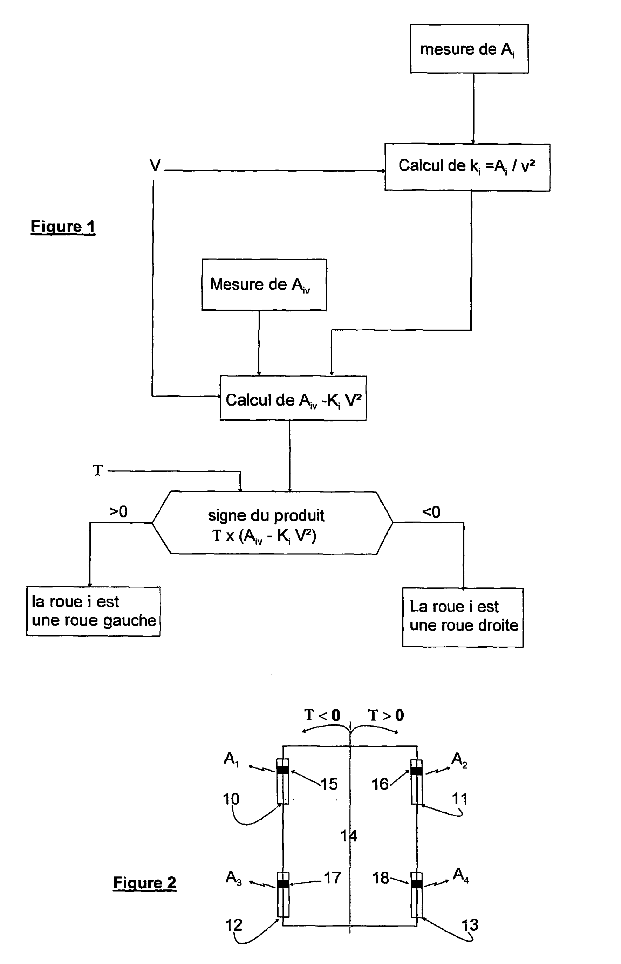

Comme cela est représenté à la figure 2, un véhicule 14 est muni d'au moins quatre roues 10 à 13. Chacune de ces roues est munie d'un capteur d'accélérations centripète standard 15 à 18. Ces capteurs sont bien connus et ne seront pas détaillés ici.

L'invention part du principe suivant, la roue intérieure à un virage a une vitesse moindre que la roue externe au virage. L'invention réside plus précisemmment dans le fait que : la roue interne au virage a une vitesse moindre que cette même roue lorsque le véhicule se déplace en ligne droite. Il résulte de cette constatation que l'accélération d'une roue interne à un virage est inférieure à l'accélération de cette même roue lorsque le véhicule se déplace en ligne droite.

Le véhicule 14 est par ailleurs muni d'un capteur d'angle volant T bien connu en soi. Ce capteur est notamment nécessaire pour la commande de la direction assistée. On notera que dans le cadre de la présente invention, la connaissance du sens de rotation du véhicule est primordiale. En conséquence une convention est établie pour représenter le sens de rotation du véhicule. A savoir, par exemple, lorsque le véhicule tourne à gauche l'angle volant T est négatif (cas représenté à la figure 2). Bien entendu la convention inverse aurait également pu être prise.

Le véhicule 14 est également muni d'un tachymètre classique. De ce fait la vitesse de déplacement V du véhicule est connue.

Le procédé selon l'invention consiste **dans un premier temps,** lorsque le véhicule se déplace en ligne droite :

- à mesurer l'accélération centripète $A_i$ de chacune des roues du véhicule à l'aide du capteur associé à chacune des roues, et
c) - à déterminer un coefficient de correction $k_i$ pour chacune des roues selon la loi suivante :

$$A_i = K_i V^2, \quad (1)$$

où $A_i$ est l'accélération centripète en ligne droite mesurée sur la roue i, et V est la vitesse du véhicule,

Selon l'invention, on considère que le véhicule 14 se déplace en ligne droite lorsque l'angle volant T est inférieur à 5°, c'est à dire est sensiblement nul.

L'accélération centripète de chaque roue est mesurée en continue par le capteur associé à cette roue. Ainsi l'accélération centripète $A_1$ de la roue 10 est mesurée par le capteur 15 (de même pour chacune des autres roues).

Pour chacune des roues on calcule le coefficient de correction $K_i$ en fonction de la formule **(1)** donnée ci-dessus. En effet la vitesse V du véhicule étant connue et l'accélération $A_i$ en ligne droite étant mesurée ce coefficient $K_i$ est égal à $A_i/V^2$.

On détermine ainsi le coefficient de correction $K_1$ de la roue 10, $K_2$ de la roue 11, $K_3$ de la roue 12 et $K_4$ de la roue 13. Bien entendu, il est possible pour consolider le calcul de ces coefficients d'en effectuer la moyenne, pour trouver en fait un $K_i$ moyen pour chacune des roues.

Il est à noter que le calcul des coefficients $K_i$ de chaque roue est effectué lorsque le véhicule se déplace en ligne droite ( T inférieur à 5°) car c'est le seul moment où la relation **(1)** est totalement vérifiée.

Le calcul du coefficient $K_i$ permet de s'affranchir des disparités entre différents capteurs, de manière à obtenir des mesures d'accélération qui puissent être comparées même si elles sont en provenance de roues distinctes.

**Dans un second temps,** selon l'invention, pour augmenter encore la précision de la mesure on compare non pas, l'accélération de deux roues entre elles (une étant interne au virage et l'autre externe), mais on compare l'accélération théorique d'une roue en ligne droite avec l'accélération de cette même roue en virage. Ceci permet de détecter avec une meilleure précision tout écart d'accélération car la répétabilité d'une mesure avec un même capteur est supérieure à 99%.

Ainsi, lorsque le véhicule est détecté comme étant en virage (T supérieur à 5°), on mesure l'accélération de chaque roue en virage $A_{iv}$;

La vitesse V du véhicule est mesurée simultanément. Par calcul on détermine l'accélération théorique $A_i$ qu'aurait eu cette même roue si elle avait été en ligne droite. A cet effet il suffit de former le produit $K_i V^2$ et ce pour chaque roue.

On calcule l'écart existant entre l'accélération mesurée en virage $A_{iv}$ et l'accélération théorique en ligne droite $A_i$ pour une même roue, c'est dire :

$$A_{iv} - A_i = A_{iv} - (K_i v^2) = \Delta_i \qquad (2).$$

Si la convention de représentation des angles est la suivante :

- un angle volant est négatif lorsque le véhicule tourne à gauche, alors lorsque le véhicule tourne à gauche la roue avant gauche 10 à une accélération en virage $A_{1v}$ inférieure, à son accélération $A_1$ en ligne droite. De ce fait ($A_{1iv}$ - $A_1$) est négatif, c'est à dire $\Delta_1$ est négatif. Comme le véhicule tourne à gauche T est également négatif ! Il en résulte que le produit T x $\Delta_1$ est positif.

Il résulte de ceci que le signe du produit :

$$\Delta_i \text{ x } T \qquad\qquad (3)$$

donne une indication de la position de la roue i.

Ainsi, avec la convention T négatif lors d'un virage à gauche, le produit :

a) $\Delta_i$ x T est positif lorsque la roue i est située sur la gauche du véhicule, et

b) $\Delta_i$ x T est négatif lorsque la roue i est située à droite du véhicule.

Le signe du produit $\Delta_i$ x T pour une roue i donnée, informe donc directement sur la position de cette roue.

Bien entendu, si la convention inverse avait été adoptée pour la représentation des angles volant (angle volant positif lorsque le véhicule tourne à gauche), il suffirait d'inverser les cas a) et b) ci-dessus.

La valeur du produit $\Delta_i$ x T donne, quant à elle, une indication de l'indice de fiabilité de la localisation trouvée pour cette roue. En effet plus l'angle volant T est important, plus l'écart entre l'accélération en virage et l'accélération en ligne droite est important. Dons plus la valeur $\Delta_i$ x T est grande et plus la localisation de la roue issue de cette mesure est fiable.

Ainsi si les capteurs standards étaient employés dans des conditions optimum, le signe de $\Delta_i$ x T serait suffisant pour indiquer de quel côté du véhicule se situe, la roue i correspondante. Mais cela n'est pas toujours le cas.

En effet souvent le signe de ce produit fluctue pour plusieurs mesures successives. Il n'est donc pas toujours possible de localiser une roue sur une seule mesure effectuée.

La présente invention propose dans ce cas d'effectuer un certain nombre de fois les mesures et les calculs correspondants avant de statuer de manière définitive sur la localisation d'une roue.

Ainsi, si l'on fait la somme de plusieurs valeurs de $\Delta_i$ pour la roue i, et ce pour chacune des roues, les deux plus grandes valeurs trouvées correspondent aux roues gauches du véhicule (avec la convention angle négatif si véhicule tourne à gauche). Si l'on avait pris la convention inverse, les deux plus grandes sommes correspondraient aux roues droites du véhicule.

Au lieu d'effectuer la somme des $\Delta_i$ pour chaque roue il est également possible d'en faire la moyenne. Si le nombre de mesures est suffisant (typiquement supérieur à 10) alors les deux plus fortes valeurs correspondent aux roues gauches du véhicule (toujours avec la même convention de base).

Lorsque l'on fait ainsi des moyennes ou une sommation, il est avantageux de supprimer de ces moyennes ou sommes les valeurs d'accélérations en virage qui paraissent aberrantes. Une valeur est considérée comme aberrante si elle diffère, par exemple, de plus de 10g (g est l'accélération de la pesanteur) des autres valeurs d'accélérations trouvées pour les autres roues au même moment.

On notera que pour économiser la batterie des capteurs d'accélération on mesure l'accélération toutes les minutes par exemple. Dés que la localisation droite et gauche des roues est acquise, ce procédé de localisation est interrompu, pendant tout le reste du trajet. L'expérience montre qu'après quelques minutes de déplacement du véhicule la localisation des roues est acquise.

Ensuite si l'une de ces roues se dégonfle brusquement ou si une situation anormale de température et/ ou de pression se présente, le calculateur (non représenté) gérant cette fonction dans le véhicule est capable d'informer le conducteur qu'une des roues droites ou gauches présente un défaut.

Bien entendu lorsque l'on combine ce procédé de localisation des roues droite et gauche avec un procédé de localisation des roues avant et arrière, le système est alors informé automatiquement de la position exacte de chacune de ses roues. Dès que l'une d'entre elles présente un défaut il est alors capable d'informer le conducteur sur la position exacte de la roue en défaut.

Bien entendu, la présente invention n'est pas limitée aux modes de réalisation ci-dessus décrit. Ainsi Il est possible de comparer les mesures d'accélérations provenant de roues montées sur un même essieu de manière à détecter des phénomènes de glissement ou de patinage d'une roue. De même la valeur limite de 5°, pour détecter le déplacement en ligne droite du véhicule peut être légèrement modifiée (en fonction des véhicules).

**Revendications**

1. Procédé de localisation automatique des roues droites et gauches d'un véhicule automobile (14) du type comportant une étape de mesure automatique de l'accélération centripète ($A_i$) d'une roue (i), le dit procédé étant **caractérisé en ce qu'**il consiste à comparer l'accélération centripète théorique d'une roue en ligne droite ($A_i$) avec l'accélération centripète mesurée de cette même roue en virage ($A_{iv}$) pour une vitesse (V) de véhicule donnée, et pour un angle volant (T) donné, afin de déterminer si la dite roue (i) se trouve sur la droite ou sur la gauche du véhicule.

2. Procédé de localisation automatique selon la revendication 1, **caractérisé en ce qu'**il consiste dans un premier temps à :

   a) - mesurer l'angle volant (T) du véhicule et lorsque cet angle volant est sensiblement nul (véhicule en ligne droite),
   b) - mesurer l'accélération centripète ($A_i$) de chacune des roues (10 à 13) du véhicule à l'aide d'un capteur associé (15 à 16) à chacune des roues, et
   c) - déterminer un coefficient de correction ($k_i$) pour chacune des roues selon la loi suivante :

   $$A_i = K_i \, V^2, \qquad (1)$$

   où $A_i$ est l'accélération centripète en ligne droite mesurée sur la roue i, et V est la vitesse du véhicule,
   et **en ce qu'**il consiste, dans un second temps lorsque le véhicule est en virage :
   d) - à mesurer l'accélération centripète en virage ($A_{iv}$) de chacune des roues,
   e) - à former la différence d'accélération $\Delta_i$ entre l'accélération théorique en ligne droite ($A_i$) pour une roue i et une vitesse V données, et l'accélération mesurée en virage ($A_{iv}$) pour cette même roue et à cette même vitesse,

   $$\Delta_i = A_{iv} - A_{i,}$$

   c'est à dire

   $$\Delta_i = A_{iv} - K_i \, V^2 \qquad (2)$$

   f) - à former le produit de cette différence $\Delta_i$ par T l'angle au volant,

   $$(A_{iv} - K_i \, V^2) \times T \qquad (3)$$

   g) - à déterminer le signe de ce produit, en fonction d'une convention choisie à savoir ; angle volant négatif si virage à gauche (ou l'inverse), et
   h) - en déduire pour chacune des roues son emplacement sur le coté gauche ou droit du véhicule.

3. Procédé de localisation selon la revendication 2, **caractérisé en ce qu'**on forme pour une roue donnée, la différence entre l'accélération mesurée en virage et l'accélération théorique en ligne droite multipliée par la valeur algébrique de l'angle volant pour déterminer si la dite roue est une roue droite ou une roue gauche du véhicule.

4. Procédé selon la revendication 2, **caractérisé en ce qu'**en prenant pour convention qu'un virage à gauche a une valeur algébrique négative, si la valeur trouvée à l'étape g) est positive c'est que la roue (i) sur laquelle l'accélération a été mesurée est une roue gauche.

5. Procédé selon la revendication 2, **caractérisé en ce qu'**en prenant pour convention qu'un virage à gauche a une valeur algébrique positive, si la valeur trouvée à l'étape g) est positive c'est que la roue (i) sur laquelle l'accélération a été mesurée est une roue droite.

6. Procédé selon l'une quelconque des revendications précédentes **caractérisé en ce qu'**on effectue la sommation d'une pluralité de différences d'accélération $\Delta_i$ pour une roue donnée, et **en ce que** l'on compare la somme obtenue avec celle de chacune des autres roues.

**7.** Procédé selon la revendication 6 **caractérisé en ce que** les deux plus grandes sommes correspondent :

- aux roues gauches, lorsque la convention est «virage à gauche égal angle volant négatif », et
- aux roues droites, lorsque la convention est «virage à gauche égal angle volant positif ».

**8.** Procédé selon l'une quelconque des revendications 1 à 5, **caractérisé en ce qu'**on effectue pour chaque roue la moyenne des différences d'accélérations $\Delta_i$ de cette roue.

**9.** Procédé selon la revendication 8, **caractérisé en ce que** les deux moyennes les plus grandes correspondent :

- aux roues gauches, lorsque la convention est «virage à gauche égal angle volant négatif », et
- aux roues droites, lorsque la convention est «virage à gauche égal angle volant positif ».

**Claims**

**1.** Method for automatic location of the right and left wheels of a motor vehicle (14) comprising a step of automatic measurement of the centripetal acceleration ($A_i$) of a wheel (i), said method being **characterised in that** it consists in comparing the theoretical centripetal acceleration of a wheel in a straight line ($A_i$) with the measured centripetal acceleration of this same wheel when cornering ($A_{1v}$) for a given vehicle speed (V) and for a given steering wheel angle (T), so as to determine whether said wheel (i) is on the right side or on the left side of the vehicle.

**2.** Method for automatic location according to claim 1, **characterised in that** it consists firstly in:

a) - measuring the vehicle's steering wheel angle (T), and when this steering wheel angle is substantially zero (the vehicle being in a straight line),
b) - measuring the centripetal acceleration ($A_i$) of each of the wheels (10 to 13) of the vehicle with the aid of a sensor (15 to 16) associated with each of the wheels, and
c) - determining a correction coefficient ($k_i$) for each of the wheels according to the following law:

$$A_i = K_i V^2 \qquad\qquad (1)$$

where $A_i$ is the straight-line centripetal acceleration measured on wheel i and V is the speed of the vehicle, and that it consists secondly, when the vehicle is cornering, in:
d) - measuring the centripetal acceleration when cornering ($A_{iv}$) of each of the wheels,
e) - forcing the difference in acceleration $\Delta_i$ between the theoretical acceleration in a straight line ($A_i$) for a given wheel and a given speed V, and the acceleration measured when cornering ($A_{iv}$) for this same wheel and at this same speed,

$$\Delta_i = A_{iv} - A_i,$$

that is to say

$$\Delta_i = A_{iv} - K_i V^2 \qquad\qquad (2)$$

f) - forming the product of this difference $\Delta_i$ times T the angle at the steering wheel,

$$(A_{iv} - K_i V^2) \times T \qquad\qquad (3)$$

g) - determining the sign of this product, as a function of a selected convention, that is to say: negative steering wheel angle if cornering to the left (or the reverse) and

h) determining for each of the wheels its location on the left or right side of the vehicle.

3. Method for location according to claim 2, **characterised in that** for a given wheel the difference is formed between the acceleration measured when cornering and the theoretical acceleration in a straight line multiplied by the algebraic value of the steering wheel angle to determine whether said wheel is a right wheel or a left wheel of the vehicle.

4. Method according to claim 2, **characterised in that** if the convention is that cornering to the left has a negative algebraic value, if the value found in step g) is positive, the wheel (i) on which the acceleration has been measured is a left wheel.

5. Method according to claim 2, **characterised in that** if the convention is that cornering to the left has a positive algebraic value, if the value found in step g) is positive, the wheel (i) on which the acceleration has been measured is a right wheel.

6. Method according to one of the preceding claims, **characterised in that** a plurality of differences in acceleration $\Delta_1$ are summed for a given wheel, and the sum obtained is compared with that of each of the other wheels.

7. Method according to claim 6,
   **characterised in that** the largest two sums correspond:

   - to the left wheels when the convention is that cornering to the left equals negative steering wheel angle, and
   - to the right wheels when the convention is that cornering to the left equals positive steering wheel angle.

8. Method according to one of claims 1 to 5, **characterised in that** for each wheel the differences in accelerations $\Delta_i$ of said wheel are averaged.

9. Method according to claim 8, **characterised in that** the two largest averages correspond:

   - to the left wheels when the convention is that cornering to the left equals negative steering wheel angle, and
   - to the right wheels when the convention is that cornering to the left equals positive steering wheel angle.

**Patentansprüche**

1. Verfahren zum automatischen Orten der rechten und linken Räder eines Kraftfahrzeugs (14), das einen Schritt zur automatischen Messung der Zentripetalbeschleunigung ($A_i$) eines Rads (i) umfasst, wobei das Verfahren **dadurch gekennzeichnet ist, dass** es aus dem Vergleich der theoretischen Zentripetalbeschleunigung eines Rads auf einer Geraden ($A_i$) mit der gemessenen Zentripetalbeschleunigung ($A_{iv}$) desselben Rads beim Fahren einer Kurve bei einer bestimmten Geschwindigkeit (V) des Fahrzeugs und bei einem bestimmten Lenkwinkel (T) besteht, um zu ermitteln, ob sich das Rad (i) auf der rechten oder auf der linken Seite des Fahrzeugs befindet.

2. Verfahren zum automatischen Orten nach Anspruch 1, **dadurch gekennzeichnet, dass** es erstens aus Folgendem besteht:

   a) Messen des Lenkwinkels (T) des Fahrzeugs und wenn dieser Lenkwinkel im Wesentlichen null ist (Fahrzeug auf einer Geraden),
   b) Messen der Zentripetalbeschleunigung ($A_i$) jedes Rads (10 bis 13) des Fahrzeugs mithilfe eines Sensors (15 bis 16), der zu jedem Rad gehört, und
   c) Ermitteln eines Korrekturbeiwerts ($k_i$) für jedes Rad nach folgendem Gesetz:

$$A_i = K_i \ V^2 \qquad\qquad (1)$$

   wobei $A_i$ die Zentripetalbeschleunigung auf einer Geraden ist, die am Rad i gemessen wird, und V die Geschwindigkeit des Fahrzeugs ist,
   und das dann, wenn das Fahrzeug eine Kurve fährt, aus Folgendem besteht:
   d) Messen der Zentripetalbeschleunigung beim Fahren einer Kurve ($A_{iv}$) jedes Rads,

e) Bilden der Differenz der Beschleunigung $\Delta_i$ zwischen der theoretischen Beschleunigung ($A_i$) auf einer Geraden bei einem bestimmten Rad i und einer bestimmten Geschwindigkeit V und der gemessenen Beschleunigung beim Fahren einer Kurve ($A_{iv}$) bei demselben Rad bei derselben Geschwindigkeit,

$$\Delta_i = A_{iv} - A_i,$$

das heißt

$$\Delta_i = A_{iv} - K_i \ V^2 \qquad (2)$$

f) Bilden des Produkts aus dieser Differenz $\Delta_i$ und dem Lenkwinkel T,

$$(A_{iv} - K_i \ V^2) \ x \ T \qquad (3)$$

g) Bestimmen des Vorzeichens dieses Produkts entsprechend einem gewählten Grundsatz und zwar: negativer Lenkwinkel beim Fahren einer Linkskurve (oder umgekehrt) und
h) daraus Ableiten der Lage jedes Rads auf der linken oder rechten Seite des Fahrzeugs.

3. Verfahren zum Orten nach Anspruch 2, **dadurch gekennzeichnet, dass** für ein bestimmtes Rad die Differenz zwischen der Beschleunigung, die beim Fahren einer Kurve gemessen wird, und der theoretischen Beschleunigung auf einer Geraden gebildet wird, die mit dem algebraischen Wert des Lenkwinkels multipliziert wird, um zu ermitteln, ob das Rad i ein rechtes oder linkes Rad des Fahrzeugs ist.

4. Verfahren nach Anspruch 2, **dadurch gekennzeichnet, dass**, wenn der Grundsatz angewendet wird, dass beim Fahren einer Linkskurve ein negativer algebraischer Wert vorliegt, das Rad (i), an dem die Beschleunigung gemessen wurde, ein linkes Rad ist, wenn der Wert, der bei Schritt g) ermittelt wurde, positiv ist.

5. Verfahren nach Anspruch 2, **dadurch gekennzeichnet, dass**, wenn der Grundsatz angewendet wird, dass beim Fahren einer Linkskurve ein positiver algebraischer Wert vorliegt, das Rad (i), an dem die Beschleunigung gemessen wurde, ein rechtes Rad ist, wenn der Wert, der bei Schritt g) ermittelt wurde, positiv ist.

6. Verfahren nach einem der vorhergehenden Ansprüche, **dadurch gekennzeichnet, dass** mehrere Beschleunigungsdifferenzwerte $\Delta_i$ für ein bestimmtes Rad zusammengerechnet werden und dass die erhaltene Summe mit der von jedem anderen Rad verglichen wird.

7. Verfahren nach Anspruch 6, **dadurch gekennzeichnet, dass** die beiden höchsten Summen:

- den linken Rädern entsprechen, wenn der Grundsatz "Fahren einer Linkskurve entspricht negativem Lenkwinkel" lautet, und
- den rechten Rädern entsprechen, wenn der Grundsatz "Fahren einer Linkskurve entspricht positivem Lenkwinkel" lautet.

8. Verfahren nach einem der Ansprüche 1 bis 5, **dadurch gekennzeichnet, dass** für jedes Rad der Mittelwert der Beschleunigungsdifferenzwerte $\Delta_i$ dieses Rads ermittelt wird.

9. Verfahren nach Anspruch 8, **dadurch gekennzeichnet, dass** die beiden höchsten Mittelwerte:

- den linken Rädern entsprechen, wenn der Grundsatz "Fahren einer Linkskurve entspricht negativem Lenkwinkel" lautet, und
- den rechten Rädern entsprechen, wenn der Grundsatz "Fahren einer Linkskurve entspricht positivem Lenkwinkel" lautet.

mesure de $A_i$

$V$ ───────────────► Calcul de $k_i = A_i / v^2$

**Figure 1**

Mesure de $A_{iv}$

Calcul de $A_{iv} - K_i V^2$

$T$ ────────

>0      signe du produit
$T \times (A_{iv} - K_i V^2)$      <0

la roue i est
une roue gauche

La roue i est
une roue droite

$T < 0$    $T > 0$

$A_1$   15    16   $A_2$

10      11

14

$A_3$   17    18   $A_4$

**Figure 2**

12      13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19856861 A